# EUROPÄISCHE PATENTSCHRIFT

(11) **EP 1 760 367 B1**
(45) Veröffentlichungstag und Bekanntmachung des Hinweises auf die Patenterteilung: **11.03.2009**
(21) Anmeldenummer: 05107910.1
(22) Anmeldetag: 30.08.2005
(51) Int. Cl.: F16H 19/02

(54) **Vorrichtung mit Welle und Treibmutter**
Drive nut and shaft device.
Ensemble d'arbre et d'écrou d'entraînement

(43) Veröffentlichungstag der Anmeldung: 07.03.2007
(73) Patentinhaber: PWB systems AG, 3900 Brig (CH)
(72) Erfinder: Graf, Helmuth PWB systems AG, 3900 Brig (CH)
(74) Vertreter: Stocker, Kurt

(56) Entgegenhaltungen:
- US-A- 4 253 342
- US-A- 4 947 698
- US-A- 6 081 050
- PATENT ABSTRACTS OF JAPAN Bd. 008, Nr. 189 (M-321), 30. August 1984 (1984-08-30) & JP 59 080558 A (KAZUAKI ANDOU), 10. Mai 1984 (1984-05-10)

## Beschreibung

Die Erfindung bezieht sich auf Vorrichtungen nach dem Oberbegriff des Anspruches 1.

Es gibt sehr viele verschiedenen Vorrichtungen oder Geräte die Antriebe zum Positionieren von Vorrichtungs- bzw. Geräteteilen umfassen. Für eine genaue Positionierung werden etwa Schrittmotoren mit aufwendigen Steuerungen eingesetzt. Für viele Anwendungen sind Schrittmotoren mit ihren Steuerungen zu komplex. Wenn beim Positionieren lediglich ein langsamer Vorschub und das Abschalten des Vorschubes beim Erreichen der gewünschten Position benötigt wird, so können Antriebsvorrichtungen mit einer drehenden Welle und einer Treibmutter eingesetzt werden. Wenn die Längsbewegung der Treibmutter relativ zur Welle pro Umdrehung der Welle klein ist, so kann durch den langsamen Vorschub eine genaue Positionierung ermöglicht werden. Die Welle kann dabei mit einer Kurbel oder über einen Motor in Drehung versetzt werden. Zum Beenden des Vorschubes wird das Drehen der Kurbel oder die Speisung des Motors unterbrochen. Bei der Umwandlung der Rotationsbewegung in eine Längsbewegung ist entweder die Welle axial festgehalten und die Treibmutter in Längsrichtung verschiebbar angeordnet, oder die Welle ist längsverschiebbar gelagert und die Treibmutter axial festgehalten.

Zum Vermessen von Werkzeugen werden Voreinstellgeräte eingesetzt. Diese Vorein-stellgeräte umfassen eine Werkzeugaufnahme und eine Darstellungsanordnung. Anhand der Darstellung kann das Werkzeug beurteilt bzw. vermessen werden. Die Dar-stellungsanordnung kann einen Profilprojektor und/oder mindestens eine digitale Kamera, einen Bildschirm und gegebenenfalls einen Bildauswertungsrechner umfassen. Damit ein gewünschter Bereich eines eingesetzten Werkzeuges einem gewünschten Erfassungsbereich der Darstellungsanordnung zugeordnet ist, muss die relative Lage zwischen Werkzeug bzw. Werkzeugaufnahme und Darstellungsanordnung verstellt werden. Die Verstellung erfolgt zumindest in einer Richtung, vorzugsweise aber in zwei orthogonalen Richtungen, insbesondere horizontal und vertikal. Für jede Verstellrichtung wird eine Antriebsvorrichtung eingesetzt. Zur Positionserfassung wird beispielsweise ein Glasmassstab mit einer entsprechenden Messelektronik eingesetzt. Aus der EP 0 849 035 A1 ist ein Voreinstellgerät bekannt, bei dem die Verstellung von Hand über Grob- und Feinverstellkurbeln erfolgt.

Nebst den Voreinstellgeräten gibt es auch andere Vorrichtungen, die eine genaue Positionierung in einer, zwei oder gegebenenfalls drei, Richtungen umfassen. Beispielsweise kann eine horizontale Auflagefläche in einer beliebigen Richtung horizontal und gegebenenfalls auch vertikal verschoben werden. Die horizontale Verschiebung wird durch Verschiebungen in zwei orthogonalen Richtungen parallel zur Auflagefläche erzielt. Die beschriebene verstellbare Auflagefläche kann als Messtisch eingesetzt werden. Eine genaue Positionierung wird generell bei automatisierten Vermessungs- und Bearbeitungsvorgängen benötigt.

Aus den Schriften EP 034 388 A2, DE 27 36 386 A1, US 4 253 342, US 4 573 367 sind Antriebsvorrichtungen mit einer drehenden Welle und einer Treibmutter bekannt, wobei die Treibmutter Kugellager umfasst. Die Kugellager sind im Gehäuse der Treibmutter so gehalten, dass eine relativ zum Gehäuse drehbare Kontaktfläche mit einem Kontaktbereich an die Welle angepresst ist. In den beschriebenen Ausführungsformen verläuft die Welle durch die zentrale Öffnung der Kugellager und die Kugellager sind an ihrer Aussenfläche im Gehäuse gehalten. Die US 4 253 342 beschreibt die eingestellte Steigung. Zwischen der drehbaren Kontaktfläche und der Welle ist eine Kontaktlinie ausgebildet, die unter dem Steigungswinkel zur Normalebene auf der Wellenachse verläuft. Gemäss der US 4 573 367 kann bei Lagern, die sich rund um die Welle erstrecken, eine genaue Ausrichtung beispielsweise mit Ausrichtungsringen erzielt werden.

Es ist auch möglich ein Drehlager über einen zentralen Haltebolzen am Gehäuse zu lagern und mit der Aussenfläche des Drehlagers an die Welle zu pressen. Um eine gute Anpressung zu gewährleisten werden mindesten zwei Drehlager von entgegen gesetzten Seiten an die Welle gepresst. Ein optimales Anliegen der Kontaktflächen kann mit drei um 120° versetzt angepressten Lagern erzielt werden. Die drehbaren Kontaktflächen, welche an die Welle angepresst werden, können von beliebigen Lagern gebildet werden. Bevorzugt werden präzise Lager mit kleinem Reibungswiderstand eingesetzt, insbesondere Kugellager, Wälzlager oder Rollenlager.

Die Abrollrichtung der drehbaren Kontaktfläche an der Welle liegt in einer Normalebene der Lagerachse und die Abrollrichtung der Welle an der drehbaren Kontaktfläche liegt in einer Normalebene zur Wellenachse. Zwischen den beiden von einem zentralen Kontaktpunkt zwischen Welle und Kontaktfläche ausgehenden Abrollrichtungen liegt der Steigungswinkel. In der Projektion auf die durch den Kontaktpunkt führende Tangentialebene an der Welle, entspricht der Winkel zwischen der Wellenachse und Lagerachse dem Steigungswinkel zwischen den Abrollrichtungen. Wenn nun der Steigungswinkel als Winkel zwischen den beiden Achsen erwähnt wird, so handelt es sich um den Winkel in der Projektion auf die durch den Kontaktpunkt führende Tangentialebene an der Welle. Der Vorschub zwischen Welle und Treibmutter pro Wellenumdrehung entspricht im Wesentlichen dem Produkt aus dem Wellenumfang und dem Sinus des Steigungswinkels. Durch die Wahl eines kleinen Steigungswinkels und/oder eines kleinen Wellenumfangs kann der Vorschub pro Wellenumdrehung klein gehalten werden.

Bei kleinem Vorschub ist eine präzise Positionierung möglich. Der Nachteil eines kleinen Vorschubes besteht aber darin, dass für grosse Verschiebungen sehr viele Umdrehungen der Welle nötig sind und somit viel Zeit benötigt wird. Bei Voreinstellgeräten sind Lösungen bekannt, bei denen für den schnellen Vorschub die Klemmung der Treibmutter gelöst und eine Verstellung von Hand oder mit einer anderen Antriebsvorrichtung durchgeführt wird.

Aus der DE 27 36 386 ist eine Lösung bekannt bei der mit einem Stellritzel der Steigwinkel von vier Wälzlagern verstellt werden kann. Die Wälzlager verlaufen um die Welle und werden von Tellerfedern an die Welle gepresst. Je zwei Lager werden von einer ersten Richtung und zwei Lager von einer entgegengesetzten zweiten Richtung her an die Welle gepresst. Um die Schwenkmöglichkeit zu erhalten, sind die Lager in Stellglieder eingesetzt und die Stellglieder am Gehäuse der Treibmutter schwenkbar gelagert. Die Stellglieder sind durch Zahnräder miteinander gekoppelt. Die mit vertretbarem Aufwand erzielbare Einstellgenauigkeit für kleine Steigwinkel ist zuwenig genau. Darum kann ein für das genaue Positionieren nötiger kleiner Stellwinkel nicht genügend genau und auch nicht wiederholbar eingestellt werden. Zudem ist der Aufbau dieser Lösung sehr kompliziert.

Die erfindungsgemässe Aufgabe besteht nun darin eine Vorrichtung zu finden, bei der mit einfachen Mitteln eine genaue Positionierung exakt und grosse Verschiebungen schnell durchzuführen sind.

Die Aufgabe wird durch die Merkmale des Anspruches 1 gelöst. Die abhängigen Patentansprüche beschreiben bevorzugte Ausführungsformen.

Dokument US 4947698 zeigt eine gattungsgemässe Vorrichtung.

Im Rahmen der Erfindung wurde erkannt, dass eine Welle mit mindestens zwei Treibmuttern und einer Kopplungsvorrichtung bei gleicher Wellendrehzahl das Wechseln zwischen mindestens zwei Vorschubsgeschwindigkeiten zulässt, wenn die Lager der Treibmuttern zur Welle unterschiedliche Steigwinkel aufweisen. Die Kopplungsvorrichtung ist mit den Treibmuttern verbunden und macht die Kontaktflächen der Treibmuttern bei den Kontaktbereichen an die Welle anpressbar, wobei beim Drehen der Welle die mindestens eine Kontaktfläche einer Treibmutter an die Welle angepresst ist. Wenn die Kontaktflächen der Treibmutter mit dem grösseren Steigwinkel angepresst sind, so ist ein grösserer Vorschub pro Umdrehung gegeben und ein schnelles Verstellen wird er-möglicht. Wenn die Kontaktflächen der Treibmutter mit dem kleineren Steigwinkel angepresst sind, so ist ein kleinerer Vorschub pro Umdrehung gegeben und ein genaues Positionieren wird ermöglicht. Die erfindungsgemässen Antriebsvorrichtungen sind besonders vorteilhaft für den Einsatz in Koordinatentischen mit mindestens einer Verstellachse und in Voreinstellgeräten. Ein Koordinatentisch oder ein Voreinstellgerät gemäss dem Stande der Technik kann durch den Einbau einer solchen Antriebsvorrichtung zu einem erfindungsgemässen Voreinstellgerät ausgebaut werden.

Die Kopplungsvorrichtung kann gegebenenfalls auch einen Freilauf vorsehen, bei dem keine Kontaktflächen an der Welle angepresst sind und ein Verschieben ermöglicht wird, das nicht von der drehenden Welle angetrieben wird. Die Kopplungsvorrichtung entspricht somit einer Gangschaltung, wobei die Anzahl der Gänge an die jeweilige Anwendung angepasst wird.

Bevorzugt werden Treibmuttern mit drei drehenden Kontaktflächen eingesetzt, wobei die Kontaktpunkte der drehenden Kontaktflächen an der Welle um im Wesentlichen je 120° um die Wellenachse verdreht angeordnet sind. Die drehenden Kontaktflächen können die Welle umschliessen, wobei dann die Lager entlang der Welle nebeneinander angeordnet werden müssen und somit das Gehäuse der Treibmutter gross baut. Wenn die drehenden Kontaktflächen als Aussenflächen von Drehlagern ausgebildet sind, so können diese Drehlager im gleichen Wellenabschnitt je von verschiedenen Richtungen gegen die Welle gepresst werden und das Gehäuse hat zumindest in Richtung der Wellenachse nur eine kleine Ausdehnung. Vorzugsweise werden in der Treibmutter drei Drehlager im Wesentlichen in gleichen Abständen um die Wellenachse in einem Gehäuse der Treibmutter angeordnet. Im Gehäuse ist zwischen den Drehlagern eine Durchtrittsöffnung für die Welle ausgebildet. Wenn die drehenden Kontaktflächen alle gegen den gleichen Abschnitt der Welle gerichtet sind, so entstehen beim Anpressen keine Drehmomente.

Bei einer bevorzugten einfachen Anwendung, werden zwei Treibmuttern vorgesehen. Die Kopplungsvorrichtung kann über einen Schalter betätigt werden. Vorzugsweise hat der Schalter zwei Positionen. In der einen Schalterposition klemmt die Kopplungsvorrichtung die Kontaktflächen der einen Treibmutter an der Welle fest und in der anderen Schalterposition werden die Kontaktflächen der anderen Treibmutter festgeklemmt. Gegebenenfalls kann auch lediglich ein Impulsschalter verwendet werden, wobei die Kopplungsvorrichtung bei einem Schalterimpuls von der einen Treibmutter auf die an-dere umschaltet.

Mit einer Welle, einer Drehvorrichtung, zwei einfach aufgebauten Treibmuttern mit unterschiedlichen Steigungswinkeln und einer einfachen Kopplungsvorrichtung können genaue Positionierungen exakt und grosse Verschiebungen schnell durchgeführt werden. Die erfindungsgemässe Antriebsvorrichtung ist einfach aufgebaut und ermöglichen die gewünschten Bewegungen.

Das Klemmen kann von der Kopplungsvorrichtung mechanisch, elektrisch oder mit einem Druckfluid ausgelöst werden. Bei einem elektrisch betätigten Klemmen wird vorzugsweise ein Magnetfeld aufgebaut, das die Klemmung erzielt oder löst. Die Klemmung kann aber auch von einer Hebelvorrichtung mechanisch auf eine Treibmutter übertragen werden, wobei die Hebelvorrichtung so ausgelegt ist, dass gleichzeitig nur eine Triebmutter festgepresst wird.

Wenn die Antriebsvorrichtung in Geräten eingesetzt wird, die in der Nähe von Druck-luftanschlüssen eingesetzt werden, so wird eine Druckluft-Kopplungsvorrichtung bevorzugt. Die Druckluft-Kopplungsvorrichtung umfasst zumindest eine Ventilanordnung, Druckluft-Betätigungszylinder bei den Treibmuttern und Druckluft-Leitungen vom Druckluftanschluss, zur Ventilanordnung und von dort zu den Druckluft-Betätigungszylindern. Mit einem Schalter wird eingestellt, welcher Druckluft-Betätigungszylinder mit Druckluft beaufschlagt wird. Der Schalter steuert die Ventilanordnung, so dass der gewünschte Druckluft-Betätigungszylinder mit Druckluft beaufschlagt ist. Es versteht sich von selbst, dass anstelle der Druckluft auch eine Druckflüssigkeit eingesetzt werden kann. Anstelle eines einfachen Schalters kann auch eine Steuerung mit einer beliebigen Eingabeeinrichtung eingesetzt werden.

Die Welle wird vorzugsweise von einem Elektromotor gedreht. Es versteht sich von selbst, dass die Welle auch von einer Kurbel, die von Hand gedreht wird, oder von mit Druckluft oder mit Flüssigkeit angetriebenen Motoren in Drehung versetzt werden kann.

Wenn die Welle von einem Motor in Drehung versetzt wird, so ist es zweckmässig einen Motor einzusetzen, der mit unterschiedlichen Drehzahlen betrieben werden kann. Bei einem Gleichstrom-Elektromotor kann mit kleinen Spannungen ein langsames Drehen erzielt werden, welches kombiniert mit der Treibmutter mit dem kleineren Steigwinkel bzw. Vorschub ein genaues Positionieren ermöglicht. Zum schnellen Verstellen wird die Treibmutter mit dem grösseren Steigwinkel festgeklemmt und der Elektromotor mit einer hohen Spannung bzw. Drehzahl betrieben. Die Betätigung des Elektromotors erfolgt über eine Motorsteuerung, die eine Speisung und zumindest einen Verstellschalter umfasst. Vorzugsweise wird ein Joystick eingesetzt, so dass die Drehzahl einfach durch die gewählte Auslenkung des Joysticks kontrolliert werden kann. Es versteht sich von selbst, dass anstelle eines einfachen Verstellschalter auch eine Steuerung mit einer beliebigen Eingabeeinrichtung eingesetzt werden kann. Die Steuerung des Motors kann auch mit der Steuerung der Kopplungsvorrichtung verbunden bzw. kombiniert sein.

Die erfindungsgemässen Antriebsvorrichtungen sind bei Voreinstellgeräten besonders vorteilhaft einsetzbar. Um einen gewünschten Bereich eines eingesetzten Werkzeuges einem gewünschten Erfassungsbereich der Darstellungsanordnung zuzuordnen, wird die relative Lage zwischen der Werkzeugaufnahme und Darstellungsanordnung zumindest in einer Richtung von einer Antriebsvorrichtungen mit zwei Treibmuttern verstellt. Vorzugsweise sind zwei Antriebsvorrichtungen mit je zwei Treibmuttern in zwei orthogonalen Richtungen, insbesondere horizontal und vertikal, eingesetzt. Wenn die beiden Antriebsvorrichtungen eine gemeinsame Kopplungsvorrichtung haben, so kann die Umstellung vom kleineren zum grösseren Steigwinkel bei beiden Antriebsvorrichtungen gemeinsam erfolgen. Dadurch sind immer beide Antriebsvorrichtungen gleichzeitig auf das schnelle Verstellen oder auf das positionsgenaue Verstellen eingestellt.

Mit zwei einfachen Gleichstrom-Elektromotoren einer einfachen Spannungssteuerung für die Motoren, einer einfachen Kopplungsvorrichtung und je zwei einfach aufgebauten Treibmuttern mit unterschiedlichen Steigungswinkeln können genaue Positionierungen exakt und grosse Verschiebungen schnell durchgeführt werden. Wenn die Verstellungen von Hand gemacht werden sollen, so können die Elektromotoren mit ihrer Ansteuerung durch zwei Kurbeln ersetzt werden. Die erfindungsgemässen Voreinstellgeräte sind einfach aufgebaut und ermöglichen die gewünschten Bewegungen.

Zur Optimierung der Antriebsvorrichtungen von Voreinstellgeräten wurden Testreihen mit unterschiedlichen Wellendurchmessern und Treibmutterpaaren mit verschiedenen Steigungswinkelpaaren durchgeführt. Es wurden Wellen mit Wellendurchmessern von 5, 7, 10, 12 und 20mm in Betracht gezogen. Bei den Steigungswinkeln wurden folgende Winkel in Betracht gezogen: 0.1°, 0.2°, 0.5°, 1°, 1.5°, 2°, 2.5°, 3°, 3.5°, 4°, 9°, 15°. Die kleinen Winkel sind für die präzise Positionierung und die grossen für den schnellen Vorschub gedacht. Es hat sich gezeigt, dass die Arbeitsabläufe mit dem Voreinstellgerät besonders effizient sind, wenn eine Welle mit einem Durchmesser von 20mm und eine Treibmutter mit einem Steigungswinkel von 0.2° sowie eine Treibmutter mit einem Steigungswinkel von 15° gewählt werden. Pro Wellenumdrehung ergibt sich beim Eingriff der Treibmutter mit dem kleinen Steigungswinkel ein Vorschub von lediglich 0.21 mm. Beim Eingriff der Treibmutter mit dem grossen Steigungswinkel ergibt sich pro Wellenumdrehung ein Vorschub von 16.25mm.

Bereits mit einem einfachen Elektromotor können Vorschubgeschwindigkeiten zwischen 0.001 mm/s (Treibmutter mit kleinem Steigungswinkel, kleine Motorendrehzahl) und 30mm/s (Treibmutter mit grossem Steigungswinkel, grosse Motorendrehzahl) erzielt werden. Durch die Wahl eines kleineren oder grösseren Wellendurchmessers würde dieser Bereich nach unten zu kleineren Geschwindigkeiten oder nach oben zu grösseren Geschwindigkeiten verschoben. Wenn die Spannweite nicht so gross sein muss, können die Steigungswinkel auch etwas näher beieinander und gegebenenfalls der Wellendurchmesser kleiner gewählt werden. Wenn die Spannweite aber grösser sein soll, so können die Steigungswinkel etwas weiter auseinander und gegebenenfalls der Wellendurchmesser grösser gewählt werden. Bereits mit zwei unterschiedlichen Treibmuttern pro Antriebsvorrichtung kann eine grosse Vorschub-Geschwindigkeitsspanne erzielt werden. Mit drei oder mehr Treibmuttern mit verschiedenen Steigungswinkeln werden die Möglichkeiten noch weiter erhöht, ohne dass der Aufwand wesentlich zunimmt.

Der Platzbedarf der erfindungsgemässen Antriebsvorrichtungen ist klein und sie können problemlos in Voreinstellgeräte eingebaut werden.

Die Zeichnungen erläutern die Erfindung anhand von zwei Ausführungsbeispielen, auf welche sie aber nicht eingeschränkt ist. Dabei zeigt die

Fig. 1 eine perspektivische Darstellung einer Antriebsvorrichtung,

Fig. 2 eine perspektivische Darstellung einer Treibmutter mit grossem Steigungswinkel,

Fig. 3 eine perspektivische Darstellung einer Treibmutter mit kleinem Steigungswinkel,

Fig. 4 eine Seitenansicht einer Treibmutter mit kleinem Steigungswinkel,

Fig. 5 eine Ansicht eines Voreinstellgerätes von vorne, und

Fig. 6 eine Ansicht eines Voreinstellgerätes von hinten.

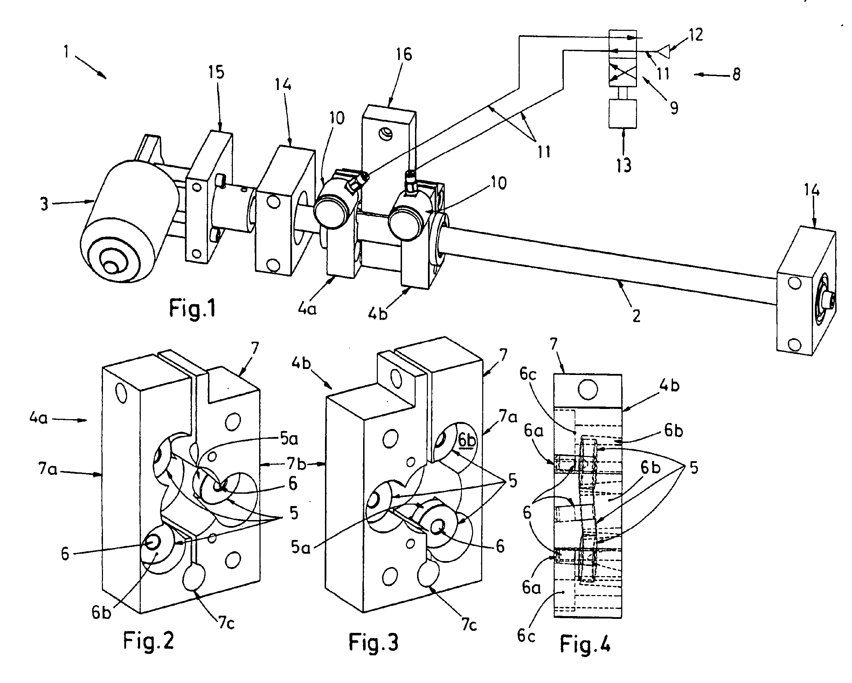

Fig. 1 zeigt eine Antriebsvorrichtung 1 mit einer Welle 2, einem Gleichstrom-Elektro-motor 3 zum Drehen der Welle 2, einer ersten Treibmutter 4a und einer zweiten Treibmutter 4b. Gemäss Fig. 2 bis 4 umfassen die beiden Treibmuttern 4a und 4b je ein Gehäuse 7 und drei Drehlager 5, welche je mit einer drehenden Kontaktfläche 5a an die Welle 2 anpressbar sind. Die Drehlager 5 sind mit ihrer zentralen Öffnung je an einem Bolzen 6 festgesetzt. Die Bolzen 6 wiederum sind je in einer Bohrung 6a des Gehäuses 7 festgesetzt. Die Ausrichtung der Bohrungen 6a und somit der Bolzen 6 ist so gewählt, dass beim aneinander Abrollen der drehenden Kontaktflächen 5a und der Welle 2 ein gewünschter Steigungswinkel gewährleistet ist. Aufgrund dieses Steigungswinkels wird mit dem Drehen der Welle 2 eine Relativbewegung in der Richtung der Wellenachse zwischen der angepressten Treibmutter 4a oder 4b und der Welle 2 erzielt.

Die beiden Treibmuttern 4a, 4b weisen unterschiedliche Steigungswinkel auf und eine Kopplungsvorrichtung 8 ist so mit den Treibmuttern verbunden, dass im Betriebszustand die Kontaktflächen 5a maximal einer Treibmutter 4a oder 4b an die Welle 2 angepresst sind. Die dargestellte Kopplungsvorrichtung 8 ist eine Druckluft-Kopplungsvorrichtung. Sie umfasst eine Ventilanordnung 9, Druckluft-Betätigungszylinder 10 bei den Treibmuttern 4a und 4b und Druckluft-Leitungen 11 vom Druckluftanschluss 12 zur Ventilanordnung 9 und von dort zu den Druckluft-Betätigungszylindern 10. Mit einem Schalter 13 wird eingestellt, welcher Druckluft-Betätigungszylinder 10 mit Druckluft beaufschlagt wird. Der Schalter 13 steuert dazu die Ventilanordnung 9.

In der dargestellten Ausführungsform ist die Welle 2 mit zwei Wellenlagern 14 drehbar gelagert. Der Elektromotor 3 ist an einer Motorenhalterung 15 befestigt und über ein nicht dargestelltes Getriebe mit der Welle 2 verbunden. Eine nicht dargestellte Motorsteuerung umfasst eine Speisung und zumindest einen Verstellschalter, so dass die Wellendrehzahl über den Verstellschalter eingestellt werden kann.

Die beiden Treibmuttern 4a und 4b sind an einem Verbindungsteil 16 befestigt. Wenn nun ein von einer Linearführung geführtes Teil durch die Antriebsvorrichtung 1 angetrieben werden soll, so wird dieses Teil vorzugsweise am Verbindungsteil 16 befestigt und die Wellenlager 14 sowie die Motorenhalterung 15 werden mit ortsfesten Teilen der Linearführung verbunden. Es versteht sich von selbst, dass das geführte Teil auch mit den Wellenlagern 14 und der Motorenhalterung 15 verbunden werden könnte und das Verbindungsteil 16 dann mit ortsfesten Teilen der Linearführung verbunden würde. Zur Positionserfassung des bewegten Teiles wird beispielsweise ein Glasmassstab mit einer entsprechenden Messelektronik eingesetzt.

Gemäss Fig. 2 und 3 sind die bevorzugten Treibmuttern 4a, 4b einfach aufgebaut. Das Gehäuse 7 jeder Treibmutter 4a, 4b umfasst zwei Abschnitte 7a und 7b, die über eine Schwenkverbindung, vorzugsweise einen schmalen Steg 7c, schwenkbar miteinander verbunden sind. Ein Steg 7c als Schwenkverbindung verhindert ein unerwünschtes Spiel. Wenn nun im ersten Abschnitt 7a zwei Drehlager 5 angeordnet sind, so ist im zweiten Abschnitt 7b noch das dritte Drehlager 5 angeordnet. Die Betätigungszylinder 10 der Kopplungsvorrichtung 8 können die freien Enden der beiden Abschnitte 7a, 7b mit einer Anpresskraft beaufschlagen. Dabei werden die beiden Abschnitte 7a, 7b um die Schwenkverbindung etwas auf einander zu geschwenkt bis die drei Drehlager 5 in der Klemmlage an der Welle 2 sind. Die Welle 2 führt nicht durch das Innere der Drehlager, sondern die Drehlager 5 sind neben der Welle 2 angeordnet. Darum können alle Drehlager 5 einer Treibmutter 4a, 4b mit ihren nach aussen gerichteten drehenden Kontaktflächen 5a im gleichen Wellenabschnitt an die Welle 2 gepresst werden. Bei dieser Pressung entsteht kein Drehmoment zwischen Welle 2 und Treibmutter 4a, 4b.

Fig. 4 zeigt, dass die präzise Ausrichtung der Drehlager 5 mit präzise ausgerichteten der Bohrungen 6a äusserst einfach erzielt werden kann. Die präzise Ausrichtung der Bohrungen 6a ist mit einem kleinen Aufwand verbunden. Es können Standard Drehlager 5 verwendet werden. Die Bolzen 6 können in den Bohrungen 6a und in den Drehlagern 5 eingepresst werden. Nebst den Bohrung 6a sind im Gehäuse 7 Aussparun-gen 6b für die Drehlager 5 und Befestigungsbohrungen 6c ausgebildet. In die Befestigungsbohrungen 6c werden Schrauben eingesetzt welche ins Verbindungsteil 16 geschraubt werden. Ausgehend von einem quaderförmigen Teil werden die beiden Ab-schnitte 7a und 7b durch einen einfachen Trennschlitz ausgebildet. Die weiteren Bearbeitungsschritte zum Herstellen des dargestellten Gehäuses 7 sind im Wesentlichen lediglich Bohrungen.

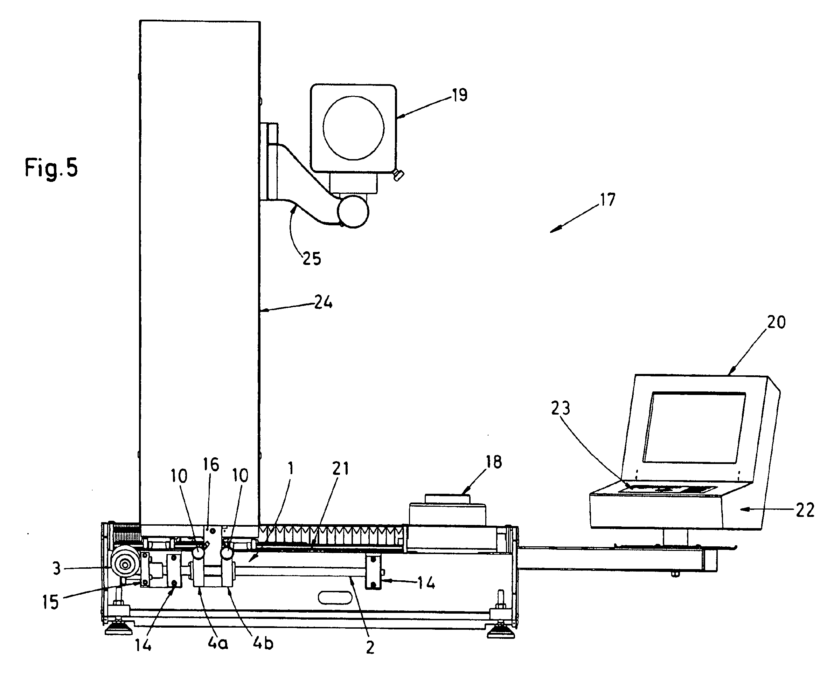

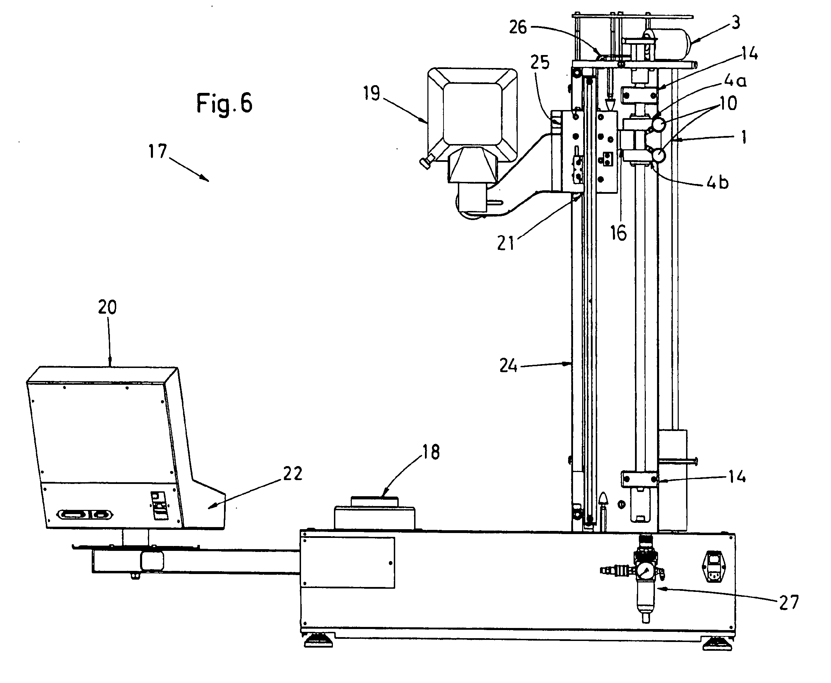

Fig. 5 und 6 zeigen ein Voreinstellgerät 17 mit einer Werkzeugaufnahme 18, einer Darstellungsanordnung 19 und mindestens einer Antriebsvorrichtung 1 zum Verstellen der relativen Lage zwischen der Werkzeugaufnahme 18 und der Darstellungsanordnung 19 entlang mindestens einer Linearführungs-Einrichtung 21. Zur Positionserfassung wird beispielsweise bei jeder Linearführungs-Einrichtung 21 ein Glasmassstab mit einer entsprechenden Messelektronik eingesetzt. Die dargestellte Ausführungsform weist eine horizontale und eine vertikale Linearführungs-Einrichtung 21 auf. Die Darstellungsanordnung 19 umfasst als relativ zur Werkzeugaufnahme 18 bewegliche Komponenten einen Profilprojektor und/oder mindestens eine digitale Kamera. Das von einer Kamera erfasste Bild wird auf einem Bildschirm dargestellt und gegebenenfalls mit einem Rechner 22 ausgewertet. Der Rechner 22 ermöglicht die Steuerung der Messabläufe und umfasst dazu eine Eingabeeinrichtung 23 und ein Steuerprogramm. Der Rechner ist vorzugsweise auch mit einer Positionserfassung verbunden, welche die Lage der Darstellungsanordnung 19 relativ zur Werkzeugaufnahme 18 erfasst. Die Positionserfassung umfasst beispielsweise zwei Glasmassstäbe mit je einer Messelektronik. Es versteht sich von selbst, dass auch magnetische Massstäbe oder insbesondere optische Distanz-Messsysteme eingesetzt werden können.

Die beiden Antriebsvorrichtung 1 sind je einer Linearführungs-Einrichtung 21 zugeordnet und umfassen eine Welle 2, einen Gleichstrom-Elektromotor 3 zum Drehen der Welle 2, eine erste Treibmutter 4a und eine zweite Treibmutter 4b. Die detaillierte Ausführung und Funktion wurde bereits anhand der Fig. 1-4 beschrieben. Die Bedienung der Kopplungsvorrichtung 8 kann über einen in Fig. 5 nicht dargestellten Schalter oder gegebenenfalls über die Eingabeeinrichtung 23 erfolgen. Analog wird auch der Elektromotor 3 beispielsweise über einen nicht dargestellten Joy-Stick oder gegebenenfalls über die Eingabeeinrichtung 23 kontrolliert.

Gemäss Fig. 5 führt die horizontale Linearführungs-Einrichtung 21 einen Turm 24 bei seiner horizontalen Bewegung gegen die Werkzeugaufnahme 18 und von dieser weg. Dabei ist der Turm 24 über das Verbindungsteil 16 mit den beiden Treibmuttern 4a, 4b verbunden. Die Wellenlager 14 und die Motorenhalterung 15 sind an ortsfesten Teilen der horizontale Linearführungs-Einrichtung 21 befestigt, wobei die Welle 2 parallel zur Linearführungs-Einrichtung 21 verläuft. Wenn die Welle 2 vom Motor 3 in Drehung versetzt wird, so sind die drehenden Kontaktflächen einer der beiden Treibmuttern 4a, 4b an die Welle 2 gepresst, was zu einer Bewegung des Verbindungsteils 16 und somit des Turms 24 entlang der Welle 2 führt.

Gemäss Fig. 6 führt die vertikale Linearführungs-Einrichtung 21 einen Schlitten 25 mit der Darstellungsanordnung 19 bei dessen vertikalen Bewegung. Der Schlitten 25 ist über das Verbindungsteil 16 mit den beiden Treibmuttern 4a, 4b verbunden. Die Wellenlager 14 und die Motorenhalterung 15 sind an ortsfesten Teilen des Turmes 24 befestigt, wobei die Welle 2 parallel zur vertikalen Linearführungs-Einrichtung 21 verläuft. Wenn die Welle 2 vom Motor 3 in Drehung versetzt wird, so sind die drehenden Kontaktflächen einer der beiden Treibmuttern 4a, 4b an die Welle 2 gepresst, was zu einer Bewegung des Verbindungsteils 16 und somit des Schlittens 25 entlang der Welle 2 führt. Beim Wechsel vom Anpressen der einen Treibmutter 4a zum Anpressen der anderen Treibmutter 4b muss ein nach unten Rutschen des Schlittens 25 verhindert werden. Dazu kann die Ventilanordnung 9 so ausgelegt werden, dass beim Wechsel kurzzeitig beide Druckluft-Betätigungszylinder 10 mit Druckluft beaufschlagt sind. Gegebenenfalls ist eine Sicherungsvorrichtung 26 vorgesehen, die mit einer Bremse und gegebenenfalls einer Seilanordnung eine unerwünschte Bewegung des Schlittens 25 verhindert.

Eine Sicherungsvorrichtung 26, die mit einer Bremse unerwünschte Bewegungen zwischen einer Welle 2 und den daran angeordneten Treibmuttern 4a, 4b verhindert, wird gegebenenfalls auch für die horizontale Bewegung vorgesehen. Die Bremse wird von einer Bremssteuerung betätigt, die vorzugsweise die Bremsung nur löst, wenn die entsprechende Welle 2 in Drehung versetzt wird. Gegebenenfalls wird aber die Bremsung nur beim Wechsel von der einen zur anderen Treibmutter 4a, 4b eingeschaltet. Die für die Sicherung gewünschte Bremsung kann auch dadurch erzielt werden, dass grundsätzlich immer mindestens zwei Treibmuttern 4a, 4b mit unterschiedlichen Steigungswinkeln an eine Welle 2 gepresst sind und erst zum Drehen der Welle 2 eine der beiden Treibmuttern 4a oder 4b in den gelösten Zustand gebracht wird. Die Ventilanordnung 9 kann so ausgelegt werden, dass bei nicht drehender Welle 2 beide Druckluft-Betätigungszylinder 10 mit Druckluft beaufschlagt sind und zum Drehen der Welle 2 nur noch ein Druckluft-Betätigungszylinder 10 mit Druckluft beaufschlagt wird.

Am Gehäuse des Voreinstellgerätes 17 ist eine Druckluft-Anschlusseinrichtung 27 angeordnet. Die Betätignungszylinder 10 jeder Antriebsvorrichtung 1 gehören zu einer Druckluft-Kopplungsvorrichtungen 8, welche gemäss Fig. 1 zumindest eine Ventilanordnung 9, Druckluft-Betätigungszylinder 10 bei den Treibmuttern 4a, 4b und Druckluft-Leitungen 11 vom Druckluftanschluss 12, zur Ventilanordnung 9 und von dort zu den Druckluft-Betätigungszylindern 10 umfassen. Zur Steuerung der beiden Antriebsvorrichtungen 1 können die Kopplungsvorrichtungen 8 getrennt bedient werden. Es kann aber zweckmässig sein, dass in einem ersten Schritt das schnelle Verschieben in beiden Richtungen und anschliessend in einem zweiten Schritt das genaue Positionieren in beiden Richtungen durchgeführt wird. Dazu kann eine gemeinsame Kopplungsvorrich-tung 8 für beide Antriebsvorrichtungen 1 eingesetzt werden. Diese gemeinsame Kopplungsvorrichtung 8 klemmt bei beiden Antriebsvorrichtungen gleichzeitig die Treibmuttern mit dem grossen oder die Treibmuttern mit dem kleinen Steigungswinkel fest.

Die Mo-torensteuerung umfasst für die Steuerung von zwei Motoren 3 vorzugsweise einen Joy-Stick. Dabei ist die Auslenkung des Sticks in einer ersten Hauptachse dem ersten und die Auslenkung in einer zweiten Hauptachse dem zweiten Motor zugeordnet. Die Drehrichtung und die Drehzahl eines Motors 3 kann über die Auslenkungskomponente in der entsprechenden Hauptachse gesteuert werden. Mit dem Joy-Stick kann somit die Drehrichtung und Drehzahl von zwei Motoren 3 gleichzeitig gesteuert werden. Dadurch sind kombinierte Bewegungen in zwei Richtungen gezielt steuerbar.

Nach dem Einsetzen eines Werkzeuges in die Werkzeugaufnahme 18 kann dieses mit einer schnellen Bewegung gleichzeitig in zwei orthogonalen Richtungen direkt in den gewünschten Bereich der Darstellungsanordnung 19 bewegt werden. Auch bei der anschliessenden genauen Positionierung kann durch die Überlagerung der langsamen Bewegungen in zwei orthogonalen Richtungen eine direkte Bewegung in die Endlage durchgeführt werden. Die gewünschten Messabläufe können daher in kurzer Zeit durchgeführt werden.

## Patentansprüche

1. Vorrichtung mit einer Welle (2), einer Drehvorrichtung (3) zum Drehen der Welle (2) und mit einer Treibmutter (4a), die mit mindestens einer drehenden Kontaktfläche (5a) an die Welle (2) anpressbar ist, wobei mit dem Drehen der Welle (2) eine Relativbewegung in der Richtung der Wellenachse zwischen Treibmutter (4a) und Welle (2) zu erzielen ist, **dadurch gekennzeichnet, dass** eine weitere Treibmutter (4b) mit mindestens einer drehenden Kontaktfläche (5a) an die Welle (2) anpressbar ist, die beiden Treibmuttern (4a, 4b) unterschiedliche Steigungswinkel aufweisen und eine Kopplungsvorrichtung (8) mit den Treibmuttern (4a, 4b) verbunden ist, welche die Kontaktflächen (5a) der Treibmuttern (4a, 4b) an die Welle (2) anpressbar macht, wobei beim Drehen der Welle (2) die mindestens eine Kontaktfläche (5a) einer Treibmutter (4a, 4b) an die Welle (2) angepresst ist.

2. Vorrichtung nach Anspruch 1, **dadurch gekennzeichnet, dass** zwei Treibmuttern (4a, 4b) eingesetzt sind und die Kopplungsvorrichtung (8) über eine Schalteinrichtung (13), insbesondere einen Schalter, zu betätigen ist.

3. Vorrichtung nach Anspruch 1 oder 2, **dadurch gekennzeichnet, dass** die Kopplungsvorrichtung (8) eine Druckluft-Kopplungsvorrichtung ist und zumindest eine Ventilanordnung (9), Druckluft-Betätigungszylinder (10) bei den Treibmuttern (4a, 4b) sowie Druckluft-Leitungen (11) vom Druckluftanschluss (12) zur Ventilanordnung (9) und von dort zu den Druckluft-Betätigungszylindern (10) umfasst, wobei jeder Druckluft-Betätigungszylinder (10) mindestens eine drehende Kontaktfläche (5a) an die Welle (2) pressbar macht.

4. Vorrichtung nach einem der Ansprüche 1 bis 3, **dadurch gekennzeichnet, dass** jede Treibmutter (4a, 4b) drei Drehlager (5) umfasst, welche von einem Gehäuse (7) je radial innen über einen am Gehäuse (7) befestigten Bolzen (6) gehalten sind und mit ihren nach aussen gerichteten drehenden Kontaktflächen (5a) im gleichen Wellenabschnitt an die Welle (2) anpressbar sind.

5. Vorrichtung nach Anspruch 4, **dadurch gekennzeichnet, dass** das Gehäuse (7) jeder Treibmutter (4a, 4b) zwei Abschnitte (7a, 7b) mit je mindestens einem Drehlager (5) umfasst, die beiden Abschnitte (7a, 7b) über eine Schwenkverbindung, vorzugsweise einen schmalen Steg (7c), miteinander verbunden sind und die Kopplungsvorrichtung (8) von der Schwenkverbindung beabstandet eine Anpresskraft zwischen den beiden Abschnitten (7a, 7b) erzielbar macht.

6. Vorrichtung nach einem der Ansprüche 1 bis 5, **dadurch gekennzeichnet, dass** als Drehvorrichtung ein Gleichstrom-Elektromotor (3) eingesetzt ist und eine Motorsteuerung, die eine Speisung und zumindest einen Verstellschalter umfasst, die Wellendrehzahl einstellbar macht.

7. Vorrichtung nach einem der Ansprüche 1 bis 6, **dadurch gekennzeichnet, dass** sie eine Werkzeugaufnahme (18), eine Darstellungsanordnung (19) zum Darstellen eines in die Werkzeugaufnahme (18) eingesetzten Werkzeuges und mindestens eine Linearführungs-Einrichtung (21) zum Führen einer Relativbewegung zwischen der Werkzeugaufnahme (18) und der Darstellungsanordnung (19) umfasst, wobei der mindestens einen Linearführungs-Einrichtung (21) die Welle (2), die Drehvorrichtung, die Treibmuttern (4a, 4b) und die Kopplungsvorrichtung (8) als Antriebsvorrichtung für die Relativbewegung zugeordnet sind.

8. Vorrichtung nach Anspruch 7, **dadurch gekennzeichnet, dass** die Welle (2) mit Drehlagern (14) parallel zur mindestens einen Linearführungs-Einrichtung (21) gelagert ist und die beiden Treibmuttern (4a, 4b) mit einem von der Linearführungs-Einrichtung (21) geführten beweglichen Teil (24, 25) verbunden sind.

9. Vorrichtung nach Anspruch 7 oder 8, **dadurch gekennzeichnet, dass** zwei Linearführungs-Einrichtungen (21) orthogonal zueinander angeordnet sind und jeder Linearführungs-Einrichtung (21) eine Antriebsvorrichtung mit der Welle (2), der Drehvorrichtung, zwei Treibmuttern (4a, 4b) mit unterschiedlichen Steigungswinkeln und der Kopplungsvorrichtung (8) zugeordnet ist.

10. Vorrichtung nach Anspruch 9, **dadurch gekennzeichnet, dass** eine Kopplungsvorrichtung (8) mit allen Treibmuttern (4a, 4b) verbunden ist, wobei die Kopplungsvorrichtung (8) im Betriebszustand bei beiden Antriebsvorrichtungen gleichzeitig die mindestens eine drehende Kontaktfläche (5a) je der Treibmutter (4a) mit dem grösseren oder der Treibmutter (4b) mit dem kleineren Steigungswinkel an die Welle (2) anpresst.

## Claims

1. Drive nut and shaft device comprising a shaft (2), a rotation device (3) for rotating said shaft (2) and a drive nut (4a), at least one rotating contact surface (5a) of which being able to be pressed against said shaft (2), wherein with rotating shaft (2) a relative movement between said drive nut (4a) and said shaft (2) in the direction of the shaft's axis may be obtained, **characterised in that** a further drive nut (4b), having at least one rotating contact surface (5a), may be pressed against said shaft (2), wherein said two drive nuts (4a, 4b) have different pitch angles, a coupling device (8) being connected to said drive nuts (4a, 4b) which enables pressing said contact surfaces (5a) of said drive nuts (4a, 4b) against said shaft (2), and wherein with rotating shaft (2) said at least one contact surface (5a) of one of said drive nuts (4a, 4b) is pressed against said shaft (2).

2. Device according to claim 1, **characterised in that** two drive nuts (4a, 4b) are used, and said coupling device (8) may be actuated by a switching device (13), particularly by a switch.

3. Device according to claim 1 or 2, **characterised in that** said coupling device (8) is a compressed air coupling device and comprises at least one valve arrangement (9), a compressed air actuation cylinder (10) at said drive nuts (4a, 4b) as well as compressed air conduits (11) from a compressed air connection (12) to said valve arrangement (9) and from there to said compressed air actuation cylinders (10), each compressed air actuation cylinder (10) enabling pressing at least one rotating contact surface (5a) against said shaft (2).

4. Device according to any of claims 1 to 3, **characterised in that** each drive nut (4a, 4b) comprises three pivot bearings (5) held by a housing (7) each by means of a bolt (6) fastened radial to the interior of the housing (7), the rotating contact surfaces (5a) of said drive nuts being turned to outside and being able to be pressed against said shaft (2) in the same shaft portion.

5. Device according to claim 4, **characterised in that** the housing (7) of each of said drive nuts (4a, 4b) comprises two sections (7a, 7b) each including at least one pivot bearing (5), the two sections (7a, 7b) being interconnected by a pivot connection, preferably by a small web (7c), said coupling device (8), spaced from said pivot connection, enabling a pressing force between said two sections (7a, 7b).

6. Device according to any of claims 1 to 5, **characterised in that** an electric direct current motor (3) is used as a rotation device, a motor control including a supply and at least one changing switch, enables adjustment of the number of revolutions of said shaft.

7. Device according to any of claims 1 to 6, **characterised in that** it comprises a tool holding fixture (18), a display arrangement (19) for displaying a tool inserted into said tool holding fixture (18), and at least one linear guiding device (21) for guiding a relative movement between said tool holding fixture (18) and said display arrangement (19), said shaft (2), said rotation device, said drive nuts (4a, 4b) and said coupling device (8) being associated to said linear guiding device (21) as a driving device for said relative movement.

8. Device according to claim 7, **characterised in that** said shaft (2) is supported by pivot bearings (14) parallel to said at least one linear guiding device (21), the two drive nuts (4a, 4b) being connected to a movable part (24, 25) guided by said linear guiding device (21).

9. Device according to claim 7 or 8, **characterised in that** two linear guiding devices (21) are arranged orthogonally to each other, and a drive device including said shaft (2), said rotation device, two drive nuts (4a, 4b) of different pitch angles and said coupling device (8) being assigned to each linear guiding device (21).

10. Device according to claim 9, **characterised in that** one coupling device (8) is connected to all drive nuts (4a, 4b), in operative state said coupling device (8) pressing said at least one rotating contact surface (5a) each of the drive nut (4a) having the larger pitch angle or of the drive nut (4b) having the smaller pitch angle against said shaft (2) at both drive devices simultaneously.

## Revendications

1. Ensemble d'arbre et d'écrou d'entraînement comprenant un arbre (2), un moyen de rotation (3) pour tourner l'arbre (2), et un écrou d'entraînement (4a), dont au moins une surface tournante de contact (5a) peut être pressée contre l'arbre (2), dans lequel, pendant la rotation de l'arbre (2), on peut réaliser un mouvement relatif entre l'écrou d'entraînement (4a) et l'arbre (2) en direction de l'axe de l'arbre, **caractérisé en ce, qu**'un autre écrou d'entraînement (4b), incluant au moins une surface tournante de contact (5a), qui peut être pressée contre l'arbre (2), dans lequel les deux écrous d'entraînement (4a, 4b) comprennent des inclinaisons différentes, et un moyen d'accouplement (8) est connecté aux écrous d'entraînement (4a, 4b), qui le rend possible de presser les surfaces de contact (5a) des écrous d'entraînement (4a, 4b) à l'arbre (2), cette au moins une surface de contact (5a) d'une des écrous d'entraînement (4a, 4b) étant pressée, pendant la rotation de l'arbre (2), contre ledit arbre (2).

2. Ensemble selon la revendication 1, **caractérisé en ce, que** l'on utilise deux écrous d'entraînement (4a, 4b), et que le moyen d'accouplement (8) peut être actionné par un moyen de commutation (13), en particulier par un interrupteur.

3. Ensemble selon la revendication 1 ou 2, **caractérisé en ce, que** le moyen d'accouplement (8) est un moyen d'accouplement (8) à air comprimé et comprend au moins une disposition de soupape (9), un cylindre d'actionnement à air comprimé (10) aux écrous d'entraînement (4a, 4b) ainsi que des conduits d'air comprimé (11) à partir du raccord d'air comprimé (12) vers la disposition de soupape (9), et d'y vers les cylindres d'actionnement à air comprimé (10), dans lequel chaque cylindre d'actionnement à air comprimé (10) rend possible à presser au moins une surface tournante de contact (5a) contre l'arbre (2).

4. Ensemble selon une quelconque des revendications 1 à 3, **caractérisé en ce, que** chaque écrou d'entraînement (4a, 4b) comprend trois coussinets de pivotement (5), tenus par un boîtier (7) chacun radialement à l'intérieur au moyen d'un boulon (6) monté au boîtier (7), les surfaces de contact (5a) desdits écrous d'entraînement étant tourné vers l'extérieur et peuvent être pressées contre l'arbre (2) dans la même section d'arbre.

5. Ensemble selon la revendication 4, **caractérisé en ce, que** le boîtier (7) de chaque écrou d'entraînement (4a, 4b) comprend deux sections (7a, 7b) incluant au moins un coussinet de pivotement (5), que les deux sections (7a, 7b) sont interconnectés au moyen d'un raccord de pivotement, de préférence par une entretoise étroite (7c), et que le moyen d'accouplement (8), espacé du raccord de pivotement, rend possible à obtenir une force de pression entre les deux sections (7a, 7b).

6. Ensemble selon une quelconque des revendications 1 à 5, **caractérisé en ce, qu**'un moteur électrique à courant continu (3) est utilisé comme le moyen de rotation, et que la commande du moteur, qui comprend une alimentation et au moins un commutateur de changement, rend ajustable le nombre de tours de l'arbre.

7. Ensemble selon une quelconque des revendications 1 à 6, **caractérisé en ce, qu**'il comprend un raccordement d'outil (18), une disposition d'affichage (19) pour représenter l'outil inséré dans le raccordement d'outil (18), et ou moins un moyen de guidage linéaire (21) pour guider un mouvement relatif entre le raccordement d'outil (18) et la disposition d'affichage (19), l'arbre (2), le moyen de rotation, les écrous d'entraînement (4a, 4b) et le moyen d'accouplement (8) étant associés à l'au moins un moyen de guidage linéaire (21) comme moyen d'entraînement pour le mouvement relatif.

8. Ensemble selon la revendication 7, **caractérisé en ce, que** l'arbre (2) est logé parallèlement à l'au moins un moyen de guidage linéaire (21) par des coussinets à pivotement (14), et que les deux écrous d'entraînement (4a, 4b) sont connectés à une partie mobile (24, 25) guidée par le moyen de guidage linéaire (21).

9. Ensemble selon la revendication 7 ou 8, **caractérisé en ce, que** deux moyens de guidage linéaire (21) sont disposés orthogonalement l'un à l'autre, et qu'un moyen d'entraînement, incluant l'arbre (2), le moyen de rotation, deux écrous d'entraînement (4a, 4b) ayant des inclinaisons différentes et le moyen d'accouplement (8) sont associés à chaque moyen de guidage linéaire (21).

10. Ensemble selon la revendication 9, **caractérisé en ce, qu**'un seul moyen d'accouplement (8) est connecté à tous les écrous d'entraînement (4a, 4b), ledit moyen d'accouplement (8), en état opérative, pressant simultanément cette au moins une surface tournante de contact (5a) de l'écrou d'entraînement (4a) ayant l'inclinaison plus grande ou de l'écrou d'entraînement ayant l'inclinaison plus petite contre l'arbre (2).
